(19) Europäisches Patentamt / European Patent Office / Office européen des brevets

(11) **EP 4 218 264 B1**

(12) **EUROPEAN PATENT SPECIFICATION**

(45) Date of publication and mention
of the grant of the patent:
**18.06.2025 Bulletin 2025/25**

(21) Application number: **20954430.3**

(22) Date of filing: **23.09.2020**

(51) International Patent Classification (IPC):
$H04W\ 4/02^{(2018.01)}$    $H04W\ 12/02^{(2009.01)}$
$H04L\ 9/32^{(2006.01)}$    $H04L\ 9/08^{(2006.01)}$
$H04W\ 4/20^{(2018.01)}$    $H04W\ 12/03^{(2021.01)}$
$H04W\ 12/63^{(2021.01)}$    $H04W\ 12/069^{(2021.01)}$
$H04L\ 9/30^{(2006.01)}$    $H04W\ 12/033^{(2021.01)}$
$H04W\ 12/041^{(2021.01)}$    $H04W\ 12/0471^{(2021.01)}$

(52) Cooperative Patent Classification (CPC):
H04W 12/02; H04L 9/0827; H04L 9/0861;
H04L 9/3073; H04W 4/20; H04W 4/50;
H04W 12/033; H04W 12/041; H04W 12/0471;
H04W 12/069; H04W 12/63

(86) International application number:
**PCT/CN2020/117089**

(87) International publication number:
**WO 2022/061576 (31.03.2022 Gazette 2022/13)**

(54) **PRIVACY-PRESERVING SERVICE PROVISION**

BEREITSTELLUNG EINES DATENSCHUTZBEWAHRENDEN DIENSTES

FOURNITURE DE SERVICES PRÉSERVANT LA CONFIDENTIALITÉ

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
**02.08.2023 Bulletin 2023/31**

(73) Proprietor: **Nokia Technologies Oy**
**02610 Espoo (FI)**

(72) Inventor: **YAN, Zheng**
**02610 Espoo (FI)**

(74) Representative: **Nokia EPO representatives**
**Nokia Technologies Oy**
**Karakaari 7**
**02610 Espoo (FI)**

(56) References cited:
WO-A1-2016/207018    CN-A- 111 083 631
US-A1- 2011 001 638    US-A1- 2012 050 033
US-A1- 2012 106 738    US-A1- 2014 349 682
US-A1- 2016 021 074

**Description**

**FIELD**

Embodiments of the present disclosure generally relate to the field of communications and in particular, to devices, methods, apparatuses and computer readable storage medium for privacy-preserving service provision.

**BACKGROUND**

Many services using communications involve accurate device positioning determination, among which location-based services (LBSs) have been gaining tremendous popularity over the recent years. A user may subscribe to a variety of location-based services. Each of these services has their own specific server that provides data associated with a specific location of a target device of the user and orientation and provides them to the target device. As such, the user can be provisioned with the highly customized services. However, allowing the location-based services to access the exact location of the user can cause privacy concerns. These privacy issues are extremely important as more day-to-day businesses and public services are turning mobile and location-based. A need exists for improved systems for preserving privacy in service provision.

Document US2012/050033A1 discloses a secure location sharing system that allows publishers to share their locations with subscribers. Each publishing device generates, encrypts and publishes its location information to a distribution service for distribution to one or more subscribing devices. The location information remains encrypted until decrypted at the subscribing devices via a decryption key shared by the publishing device with the subscribing device.

**SUMMARY**

In general, example embodiments of the present disclosure provide a solution for privacy-preserving service provision. Embodiments that do not fall under the scope of the claims, if any, are to be interpreted as examples useful for understanding various embodiments of the disclosure.

In a first aspect, there is provided a first device. The first device comprises at least one processor; and at least one memory including computer program code. The at least one memory and the computer program code are configured to, with the at least one processor, cause the first device to receive, from a second device, a request for provisioning data of a location-based service from the second device to a third device, the request comprising first secret sub-key associated with the third device; generate a first secret key for the third device based on the first secret sub-key and second secret sub-key associated with the third device; decrypt encrypted location information of the third device using the first secure key; access the data of the location-based service from the second device based on the decrypted location information of the third device; and provide the data of the location-based service to the third device.

In a second aspect, there is provided a second device. The first device comprises at least one processor; and at least one memory including computer program code. The at least one memory and the computer program code are configured to, with the at least one processor, cause the second device to receive, from a third device, a first secret sub-key associated with the third device, the third device subscribing a location-based service from the second device; transmit, to a first device, a request for provisioning data of the location-based service to the third device, the request comprising the first secret sub-key; and assign a permission to the first device to access data of the location-based service for the third device.

In a third aspect, there is provided a third device. The first device comprises at least one processor; and at least one memory including computer program code. The at least one memory and the computer program code are configured to, with the at least one processor, cause the third device to generate at least one first secret sub-key and a second secret sub-key, a first secret key being based on the second secret sub-key and one of the at least one first secret sub-key, and location information of the third device to be encrypted using the first secret key; transmit the second secret sub-key to a first device; transmit the at least one first secret sub-key respectively to at least one second device, the third device subscribing at least one location-based service respectively from the at least one second device; and obtain, from the first device, data of a location-based service provisioned by a second device of the at least one second device, the data of the location-based service being based on the location information of the third device decrypted.

In a fourth aspect, there is provided a method. The method comprises receiving, at a first device and from a second device, a request for provisioning data of a location-based service from the second device to a third device, the request comprising first secret sub-key associated with the third device; generating a first secret key for the third device based on the first secret sub-key and second secret sub-key associated with the third device; decrypting encrypted location information of the third device using the first secure key; accessing the data of the location-based service from the second device based on the decrypted location information of the third device; and providing the data of the location-based service to the third device.

In a fifth aspect, there is provided a method. The method comprises receiving, at a second device and from a third device, a first secret sub-key associated with the third device, the third device subscribing a location-based service from the second device; transmitting, to a first device, a request for provisioning data of the location-based service to the third device, the request comprising the first secret sub-key; and assigning a permission to the first device to access data of the location-based service for the third device.

In a sixth aspect, there is provided a method. The method comprises generating, at a third device, at least one first secret sub-key and a second secret sub-key, a first secret key being based on the second secret sub-key and one of the at least one first secret sub-key, and location information of the third device to be encrypted using the first secret key; transmitting the second secret sub-key to a first device; transmitting the at least one first secret sub-key respectively to at least one second device, the third device subscribing at least one location-based service respectively from the at least one second device; and obtaining, from the first device, data of a location-based service provisioned by a second device of the at least one second device, the data of the location-based service being based on the location information of the third device decrypted.

In a seventh aspect, there is provided a first apparatus. The first apparatus comprises means for receiving, from a second apparatus, a request for provisioning data of a location-based service from the second apparatus to a third apparatus, the request comprising first secret sub-key associated with the third apparatus; means for generating a first secret key for the third apparatus based on the first secret sub-key and second secret sub-key associated with the third apparatus; means for decrypting encrypted location information of the third apparatus using the first secure key; means for accessing the data of the location-based service from the second apparatus based on the decrypted location information of the third apparatus; and means for providing the data of the location-based service to the third apparatus.

In an eighth aspect, there is provided a second apparatus. The second apparatus comprises means for receiving, from a third apparatus, a first secret sub-key associated with the third apparatus, the third apparatus subscribing a location-based service from the second apparatus; means for transmitting, to a first apparatus, a request for provisioning data of the location-based service to the third apparatus, the request comprising the first secret sub-key; and means for assigning a permission to the first apparatus to access data of the location-based service to the third apparatus.

In a ninth aspect, there is provided a third apparatus. The third apparatus comprises means for generating at least one first secret sub-key and a second secret sub-key, a first secret key being based on the second secret sub-key and one of the at least one first secret sub-key, and location information of the third apparatus to be encrypted using the first secret key; means for transmitting the second secret sub-key to a first apparatus; means for transmitting the at least one first secret sub-key respectively to at least one second apparatus, the third apparatus subscribing at least one location-based service respectively from the at least one second apparatus; and means for obtaining, from the first apparatus, data of a location-based service provisioned by a second apparatus of the at least one second apparatus, the data of the location-based service being based on the location information of the third apparatus.

In a tenth aspect, there is provided a computer readable medium. The computer readable medium comprises program instructions for causing an apparatus to perform at least the method according to any one of the fourth aspect, fifth aspect, and sixth aspect.

It is to be understood that the summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, where:

Fig. 1 illustrates an example communication environment in which some example embodiments of the present disclosure can be implemented;

Fig. 2 illustrates a signaling flow for privacy-preserving service provision in accordance with some example embodiments of the present disclosure;

Fig. 3 illustrates a signaling flow for secure communication and execution in accordance with some example embodiments of the present disclosure;

Fig. 4 illustrates an example communication environment in which some further example embodiments of the present disclosure can be implemented;

Fig. 5 illustrates a signaling flow for privacy-preserving positioning in accordance with some example embodiments of the present disclosure;

Fig. 6 illustrates a signaling flow for trusted signaling and execution in accordance with some further example embodiments of the present disclosure;

Fig. 7 illustrates a flowchart of a process implemented at a first device in accordance with some example embodiments of the present disclosure;

Fig. 8 illustrates a flowchart of a process implemented at a second device in accordance with some example embodiments of the present disclosure;

Fig. 9 illustrates a flowchart of a process implemented at a third device in accordance with some example embodiments of the present disclosure;

Fig. 10 illustrates a simplified block diagram of an apparatus that is suitable for implementing example embodiments of the present disclosure; and

Fig. 11 illustrates a block diagram of an example computer readable medium in accordance with some example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, an Integrated and Access Backhaul (IAB) node, a low power node such as a femto, or a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, the term "location-based service" (LBS) refers to any service that utilizes location information of a target device. Location-based services may include various types of services offered by service providers to clients, e.g., information as to type of business, special offers, discounts, events, and the like. Example location-based services can be used in a variety of contexts, such as navigation, entertainment, health, work, personal life, etc. Location-based services include services to identify a location of a person or object, such as discovering the nearest banking cash machine or the whereabouts of a friend or employee. Location-based services include location-based commerce (e.g., trade and repair, wholesale, financial, legal, personal services, business services, communications and media,), location-based ecommerce (e.g., online transactions, coupons, marketing, advertising, etc.), accommodation (e.g., hotels, etc.), real estate, renting, construction, dining, transport and travel, travel guides, map and navigation, parcel/vehicle tracking, personalized weather services, location-based games, any combination thereof, and the like.

Conventionally, to provision a location-based service, a location of a target device is exposed to a service provider provisioning the location-based service. As such, the service provider can tail all its available data based on the location of the current target device and provide the data associated with the location to the target device. With the advent of location-based services subscribed by the user, location privacy is increasingly becoming important. In some conditions, a user may subscribe to multiple location-based services, which may increase the probability of location leakage and cause privacy concerns. It is desired that the target device can get location-based services without exposing its location information to the service providers.

In accordance with some example embodiments of the present disclosure, there is provided a solution for privacy-preserving service provision. In this solution, location information of a target device (referred to as a "third device" for the purpose of discussion) is encrypted using a secret key. The third device partitions the capability of decrypting the location information among a first device and one or more second devices provisioning location-based services for the third device. To provision data of a location-based service, a second device transmits a first secret sub-key to the first device. The first device, which has a second secret sub-key, generates the secret key based on both the first and the second secret sub-keys and decrypts the encrypted location information of the third device. The first device can use the location information to access data of the location-based service from the second device and provide the data of the location-based service to the third device.

Through this solution, during provisioning of a location-based service, location information of a target device can be preserved from being exposed to a device provisioning the location-based service. The secret sub-keys shared among the first device and the one or more second devices can allow authentication of the second device(s) at the side of the first device and such authentication is under the control of the target device.

Example embodiments related to the privacy-preserving service provision will be described in detail below with reference to the accompanying drawings.

### Example Environment for Privacy-preserving Service Provision

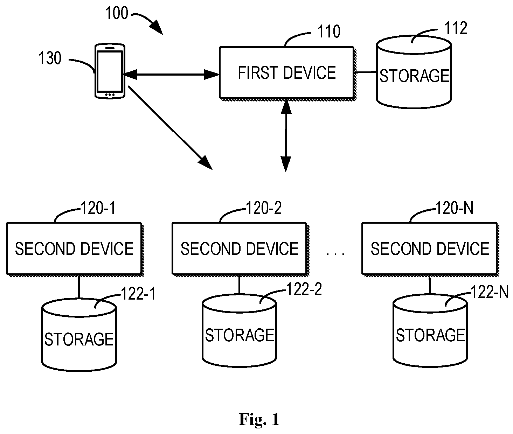

Fig. 1 shows an example communication environment 100 in which some example embodiments of the present disclosure can be implemented. In the communication environment 100, a first device 110 is configured to facilitate provisioning of data of one or more location-based services from one or more (e.g., a number of N) second devices 120-1, 120-2, ... , 120-N to a third device 130 in a privacy-preserving manner. N is an integer larger than or equal to one.

The third device 130 subscribes the one or more location-based services from the one or more second devices 120-1, 120-2, ... , 120-N (collectively or individually referred to as second devices 120 for purpose of discussion). In the example of Fig. 1, the third device 130 is illustrated as a terminal device. However, it would be appreciated that the third device 130 may be any device to which a service is provisioned.

The second devices 120 may be any servers, edge devices, computing devices/systems, devices/systems provisioned in a cloud environment, and/or other devices/systems that are deployed by respective service providers to manage and control the provisioning of the location-based services. Although more than one second device 120 is illustrated in Fig. 1, the third device 130 may subscribe to the location-based service of one of the second devices 120. In some example embodiments, data of the location-based services provisioned by the second devices 120-1, 120-2, ... , 120-N may be stored in respective storage systems 122-1, 122-2, . . . , 122-N.

As used herein, the term "data of a location-based service" refers to data or anything else that the location-based service provides to its users. Such data may also be referred to as resources of the location-based service. Familiar examples include map data, web pages, images, documents, audio and/or video data, and/or other service information.

The first device 110 may be any server, edge device, computing device/system, device/system provisioned in a cloud environment, and/or other device/system that is deployed to implement the privacy-preserving service provision to the third device 130. The first device 110 may also be referred to as a fusion device or a fusion center which may be configured to provide the privacy-preserving service provision for more than one third device which subscribes location-based services. Although illustrated as separate devices, in some example embodiments, the functionalities of the first device disclosed herein may be integrated in the third device.

In some example embodiments, the first device 110 may access to a storage system 112 which stores encrypted location information of the third device 130. The encrypted location information may be decrypted at the first device 110 to obtain location-based data for the third device 130.

Although each is illustrated as one device in Fig.1, the functionalities of the first device, the second devices, and/or the third device described herein each may be implemented by one or more physical/virtual devices/systems. It is noted that the terms "first device," "second device," and "third device" are used for ease of description only.

It is to be understood that the number of devices and their connections shown in Fig. 1 are only for the purpose of illustration without suggesting any limitation. The environment 100 may include any suitable number of devices adapted for implementing embodiments of the present disclosure. Although not shown, it should be appreciated that one or more third devices may be included in the environment 100 which subscribe the location-based services of the second devices, and one or more additional second devices may be involved in or one or more second devices may be omitted from the environment.

The signaling flow among the devices illustrated in Fig. 1 will be described in detail in the following.

### Example Embodiments of Privacy-preserving Service Provision

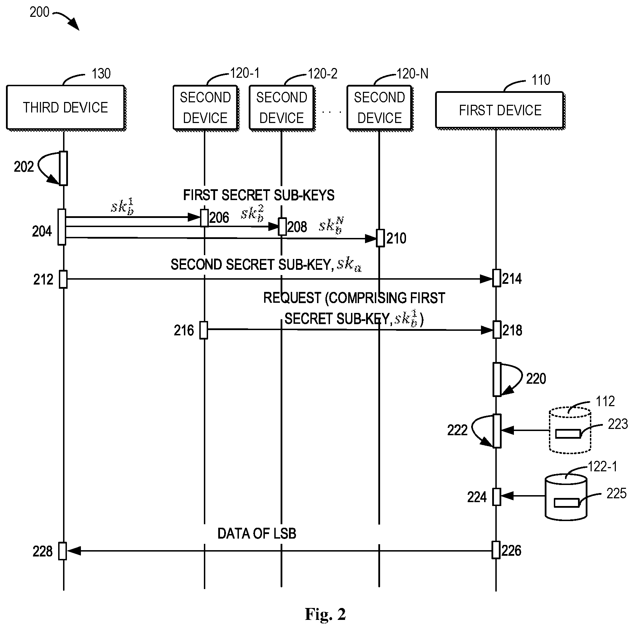

Reference is now made to Fig. 2, which shows a signaling flow 200 for privacy-preserving service provision in accordance with some example embodiments of the present disclosure. For the purpose of discussion, the signaling flow 200 will be described with reference to Fig. 1. The signaling flow 200 may involve a first device 110, N second devices 120-1, 120-2, ... , 120-N, and a third device 130 in Fig. 1. In this example, the third device 130 subscribes respective location-based services of the N second devices.

As brief introduced above, in some example embodiments of the present disclosure, to enable privacy-preserving service provision, the third device 130 partitions the decryption capability among the first device 110 and one or more second devices 120 provisioning location-based services. Location information of the third device 130 is protected with a secret key (represented as sk, which is sometimes referred to as "first secret key" for purpose of discussion). The first secret key sk is divided into two parts of secret information, one being distributed to the first device 110, and the other one being further divided into one or more parts to be distributed to the respective second device(s) 120. In the example embodiments of the signaling flow 200, the third device 130 is configured to provide the first secret key sk and its two parts of secret information.

In the signaling flow 200, the third device 130 generates 202 N respective first secret sub-keys (represented as

$$sk_b^1, \ sk_b^2, \ . \ . \ . \ ., \ sk_b^N$$

) for the N second devices 120 and a second secret sub-key (represented as $sk_a$) for the first device 110. The number (e.g., N) of the first secret sub-keys may be equal to the number (e.g., N) of the second devices 120 from which the third device 130 subscribes the location-based services, where N may be an integer larger than or equal to one. A first secret sub-key may be referred to as $sk_b^{i|i \in \{1,...,N\}}$. The N first secret sub-keys may be regarded as N shares or key shares of the other part of secret information for the first secret key sk.

The first secret sub-keys $sk_b^1, \ sk_b^2, \ . \ . \ . \ ., \ sk_b^N$ and the second secret sub-key $sk_a$ are generated in such a way that the first secret key sk can be generated or recovered based on the second secret sub-key $sk_a$ and any of the N first secret sub-keys $sk_b^1, \ sk_b^2, \ . \ . \ . \ ., \ sk_b^N$. On one hand, neither the first device 110 nor the second device 120 has the full capability to recover the first secret key if the two parts are not both available at one device. The risks regarding to exposure of the secret sub-keys at the individual devices can be eliminated. On the other hand, it inherently supports authentication between the first device 110 and the second device 120 for the service provision.

In some example embodiments, the third device 130 may utilize a secret sharing (SS) scheme to generate the first and the second secret sub-keys. Some example embodiments of the secret sub-key generation based on the SS scheme will be described in detail below. In some example embodiments, the first and the second secret sub-keys may be different from each other.

The third device 130 transmits 204 the generated first secret sub-keys $sk_b^1, \ sk_b^2, \ . \ . \ . \ ., \ sk_b^N$ to the second devices 120-1, 120-1 , . . . , 120-N, respectively. Each of the second devices 120-1, 120-1 , . . . , 120-N receives 206, 208, . . . ,

210 the first secret sub-keys $sk_b^1, \ sk_b^2, \ . \ . \ . \ ., \ sk_b^N$. As the first secret sub-key is received from the third device 130, each second device 120 may determine that the respective first secret sub-key is associated with the third device 130.

As will be described below, the second device 120 communicates the first secret sub-key to the first device 110 to request the provisioning of its location-based service. By generating and transmitting the first secret sub-keys to the second devices 120, the third device 130 may be able to request a number of second devices 120 to offer their location-based services in a location privacy-preserving and efficient manner.

In some example embodiments, the third device 130 may transmit, in association with the first secret sub-key, an identification of the first device 110 to a second device 120. As such, the second device 120 may be able to identify the first device 110 with which it will communicate to request the provisioning of its location-based service for the third device 130. In some example embodiments, the second device 120 may be configured, by default or otherwise, to communicate with the first device 110.

The third device 130 transmits 212 the second secret sub-key $sk_a$ to the first device 110. Upon receiving 214 the second secret sub-key $sk_a$, the first device 110 may store this secret sub-key for future use. As the second secret sub-key is received from the third device 130, the first device 110 may determine that the second secret sub-key is associated with the third device 130.

In some example embodiments, to protect the second secret sub-key $sk_a$, the third device 130 may transmit the second secret sub-key $sk_a$ to the first device 110 via a secure communication channel (sometimes referred to as a "first secure communication channel" for the purpose of discussion). For example, the first device 110 may host a trusted execution environment (TEE) attested by the third device 130. The first secure communication channel may be established between the TEE hosted in the first device 110 and the third device 130.

A TEE, which may also be referred to as an enclave or a trusted zone, is created according to a promising hardware-assisted trusted computing technology. The hardware-assisted trusted computing technology may provide memory isolation, which enables a TEE host (e.g., the first device 110) set up a protected execution environment, such that code and data run inside are resilient to attacks from privilege software, including kernels of operating systems and hypervisors of virtual machines.

The TEE offers at least one of the following auxiliary functionalities: remote attestation and storage sealing. The remote attestation makes a distant entity capable of verifying the authenticity of a TEE, checking the integrity of desired code running inside and meanwhile establishing a secure communication channel with the TEE. The storage sealing allows to securely store data for the TEE in an untrusted storage area outside the TEE for future recovery, in case of server shutdown, system failure, and/or power outage. Example technologies for implementing the TEE may include the software guard extensions (SGX) technology. Other technologies may include secure virtual machines, TrustedZone, and the like.

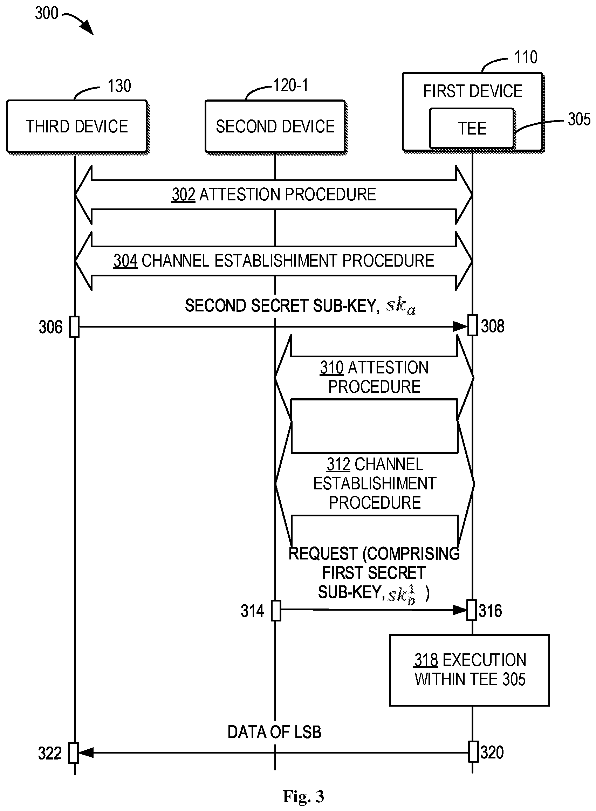

The communication between the first device 110 and the third device 130 may be performed via the secure communication channel established between the TEE hosted in the first device 110 and the third device 130. In some example embodiments, subsequent operations involving sensitive data/information may be performed within the TEE 305 at the first device 110. The communication and execution based on the TEE will be illustrated in detail below with reference to Fig. 3.

In some other example embodiments, the transmission of the second secret sub-key $sk_a$ may be protected using other protection or security schemes than the TEE-based scheme.

If data of a location-based service provisioned by any second device 120 is to be provided to the third device 130, the second device 120 can transmit a request to the first device 110 using the first secret sub-key $sk_b^{i|i \in \{1,...,N\}}$. For the purpose of description, in the signaling flow of Fig. 2, it is assumed that the second device 120-1 is to provide service data to the third device 130. It is to be understood that any other second device 120 may operate in a similar way as the second device 120-1 described below.

With the first secret sub-ley $sk_b^1$ offered by the third device 130, the second device 120-1 can contact with the first device 110 to request for provisioning data of its location-based service to the third device 130. The second device 120-1 transmits 216, to the first device 110, a request for provisioning data of its location-based service to the third device 130. The first secret sub-ley $sk_b^1$ is carried in the request.

In some example embodiments, to protect the first secret sub-key, the third device 130 may transmit the second secret sub-key $sk_a$ to the first device 110 via a secure communication channel (sometimes referred to as a "third secure communication channel" for the purpose of discussion). For example, the third secure communication channel may be established between a TEE hosted in the first device 110 and the second device 120-1. The TEE may be attested by the second device 120-1. The TEE-based communication between the first device 110 and the second device 120-1 will be illustrated in detail below with reference to Fig. 3.

Upon receiving 218 the request from the second device 120-1, the first device 110 generates 220 the first secret key $sk$ for the third device 130 based on the first secret sub-key $sk_b^1$ received from the second device 120-1 and the second secret sub-key $sk_a$ available at the first device 110. The generation of the first secret key $sk$ may depend on the generation of the first and the second secret sub-keys, some example embodiments of which will be described below.

With the first secret key $sk,$ the first device 110 is allowed to access location information of the third device 130. Specifically, the first device 110 decrypts 222 encrypted location information 223 of the third device 130 using the first secret key $sk.$ The location information may comprise a location of the third device 130. The location information may also comprise the latitude, longitude and/or altitude, horizontal speed, vertical speed, and/or orientation of the third device 130. The location information may also include other information.

In some example embodiments, the encrypted location information 223 of the third device 130 may be stored in the storage system 112 which is accessible by the first device 110, as illustrated in Fig. 2. In some example embodiments, the encrypted location information 223 may be stored in internal storage devices of the first device 110. In some example embodiments, the encrypted location information 223 may be stored in other storage devices/systems and provided for the first device 110 for decryption. For example, the encrypted location information 223 may be provided from the third device 130.

In the example embodiments of the present disclosure, the first secret key $sk,$ which is used for encrypting location information of the third device 130, cannot be recovered until the first device 110 obtains both the first and the second secret sub-keys. The location information of the third device 130 can thus be protected in a more reliable manner. Based on the first secret sub-key, the first device 110 may also be able to verify the validity of the second device 120 with respect to its eligibility for location-based service provision to the third device 130. For example, if the encrypted location information cannot be successfully decrypted using the secret key generated from the combination of the secret sub-key received from a second device and the first secret sub-key, the first device 110 may refuse to respond to the request from this second device. As such, the authentication of the devices from which the location-based services are subscribed can be authenticated at the first device under the control of the third device.

With the location information 223 decrypted, the first device 110 accesses 224 data 225 of the location-based service provisioned by the second device 120-1 based on the location information 223. The data 225 of the location-based service may also be referred to as location-based data for the third device 130. The first device 110 may be allowed to access all the data of the location-based service subscribed by the third device 130, which may, for example, stored in the storage system 122-1 of the second device 120-1. The first device 110 may tailor or customize all the available data based on the location information of the third device 130 so as to obtain the data 225 of the location-based service that is associated with the current location information.

The second device 120-1 may assign a permission to the first device 110 to access the data of the location-based service. In some example embodiments, the data of the location-based service provisioned to the third device 130 may be protected (e.g., encrypted) with a secret key (referred to as a "second secret key" for the purpose of discussion, represented as $lbsk_1$ ). The second device 120-1 may transmit the second secret key $lbsk_1$ to the first device 110 so as to allow the first device 110 to access the data of the location-based service. In some example embodiments, each or some of the $N$ second devices 120-1, 120-1, ... , 120-N may have data of their location-based services protected using respective second secret keys $lbsk_i$ where i=1, 2, . . . ., N.

In some example embodiments, the second secret key $lbsk_1$ may be provided to the first device 110 together with the first secret sub-key $sk_a^1$ in the request from the second device 120-1. In some other example embodiments, the second secret key may be provided separately or otherwise to the first device 110.

In the example embodiments illustrated in Fig. 2, the first device 110 may utilize the second secret key $lbsk_1$ to access the data 225 of the location-based service, for example, by decrypting encrypted data of the location-based service using the second secret key $lbsk_1$ . In this way, the first device 110 has limited access permission to the data of the location-based service associated with the third device 130. By means of the second secret key, the privacy of data of the location-based service provisioned at the second device 120 can also be preserved from the first device 110 and the third device 130.

The first device 110 provides 226 the data 225 of the location-based service to the third device 130. The third device 130 obtains 228 the data 225 of the location-based service and may consume the data 225 for various purposes. In some example embodiments, to preserve the privacy of the data 225 of the location-based service, the first device 110 may transmit the data 225 of the location-based service to the third device 130 via the first secure communication channel established between the TEE hosted in the first device 110 and the third device 130.

In some example embodiments, for the purpose of security, the first device 110 may discard the recovered first secret key $sk$ from its temporal memory after the encrypted location information 223 is decrypted, for example after the location 225 of the location-based service is provided to the first device 110. The first device 110 may alternatively or additionally discard the second secret sub-key $sk_b^1$ received from the second device 120-1 after the first secret key $sk$ is generated, for example after the encrypted location information 223 is decrypted. In some example embodiments, for the purpose of security, the first device 110 may also discard the second secret the second secret key $lbsk_i$ from its temporal memory after the data 225 of the location-based service for the third device 130 is obtained, for example after the data 225 is provided to the first device 110.

According to the example embodiments as described above, it is possible to preserve the privacy of the location information and probably the privacy of the data of the location-based service. The location information may not be exposed to the location-based service during the service provision. In addition, the data of the location-based service can also be protected even with the access by the first device.

### *Example Embodiments of Communication and Execution in TEE*

As mentioned above, a TEE may be created in the first device 110 to enable secure communications with the third device 130 and/or the second device(s) 120 and to protect sensitive information from being exposed by the first device 110. Fig. 3 illustrates a signaling flow 300 for secure communication and execution in accordance with some example embodiments of the present disclosure. In the example of Fig. 3, a TEE 305 is created and hosted in the first device 110. The signaling flow 300 involves the secure communication between the third device 130 and the TEE 305, trusted operations within the TEE 305 at the first device 110, and the secure communication between the second device 120-1 and the TEE 305.

In the signaling flow 300, an attestation procedure 302 is performed between the third device 130 and the TEE 305 running in the first device 110. Through the attestation procedure 302, the third device 130 attest the first device 110 as trusted.

After the attestation procedure 302, a channel establishment procedure 304 is performed between the third device 130 and the TEE 305 to establish the first secure communication channel between the third device 130 and the TEE 305. The communications between the third device 130 and the TEE 305 may be protected by applying any secure communication protocols, either available currently or to be developed in the future.

The third device 130 transmits 306 the second secret sub-key $sk_a$ to the first device 110 via the established first secure communication channel. The TEE 305 in the first device 110 receives 308 the second secret sub-key $sk_a$ from the third device 130. Through the first secure communication channel, the second secret sub-key $sk_a$ may not be leaked, stolen, or tampered during the communication. The second secret sub-key $sk_a$ may be stored in the protected memory for future use or in an outside untrusted storage area outside the TEE 305 for future recovery.

In addition to the first secure communication channel established between the third device 130 and the first device 110, or as an alternative, a further secure communication channel (i.e., the second secure communication channel) is established to enable secure communication between the second device 120-1 and the TEE 305. Specifically, an attestation procedure 310 is performed between the second device 120-1 and the TEE 305 running in the first device 110. Through the attestation procedure 310, the second device 120-1 may attest that the TEE 305 in the first device 110 is trusted.

In some example embodiments, the third device 130 may transmit an identification of the TEE 305 to the second devices 120. Thus, the second device 120-1 may determine which TEE among all the possible TEEs hosted in the first device 110 is attested by the third device 130.

After the attestation procedure 310, a channel establishment procedure 312 is performed between the second device 120-1 and the TEE 305 to establish the third secure communication channel between the second device 120-1 and the TEE 305. The communications between the second device 120-1 and the TEE 305 may be protected by applying any secure communication protocols, either available currently or to be developed in the future.

The second device 120-1 transmits 314 the first secret sub-key $sk_a^1$ to the first device 110 via the established third secure communication channel. The TEE 305 in the first device 110 receives 316 the first secret sub-key $sk_a^1$ from the second device 120-1. The first secret sub-key $sk_a^1$ may be stored in the protected memory for future use or in an outside untrusted storage area outside the TEE 305 for future recovery.

In some example embodiments, the second device 120-1 may transmit the second secret key $lbsk_1$ to the first device 110 via the established third secure communication channel. Through the third secure communication channel, the first secret sub-key and the second secret key may not be leaked, stolen, or tampered during the communication.

With the first secret sub-key $sk_a^1$ and the second secret sub-key $sk_a$, the first device 110 may perform subsequent operations to access the data 225 of the location-based service for the third device 130. In some example embodiments, executions of such operations is performed 318 within the TEE 305, including the generation of the first secret key $sk,$ the decryption of the encrypted location information of the third device 130, and/or the access to the data 225 of the location-based service, as described above.

It would be appreciated that some detailed operations described in the signaling flow 200 are not illustrated in the signaling flow 300. By means of the TEE 305, the sensitive secret key, location information, and/or data of the location-based service may not be exposed to other parts of the first device 110 outside the TEE 305. In some example embodiments, some countermeasures may be applied to overcome vulnerabilities (e.g., side channel attacks) of the TEE 305 so as to further improve the security at the TEE 305.

In addition, applying the TEE 305 can support various computations at the first device 110 without any restriction, thereby overcoming the shortcomings in traditional cryptographic solutions, such as the high computational cost and limitations on data processing. As a result, the privacy-preserving service provision can be achieved with both high security and efficiency.

***Example Embodiments of Generation of Secret Sub-keys***

As mentioned above, in some example embodiments, the first secret sub-keys $sk_b^{i|i\in\{1,...,N\}}$ and the second secret sub-key $sk_a$ may be generated according to a SS scheme. The $N$ shares of secret sub-keys $sk_b^{i|i\in\{1,...,N\}}$ distributed to the $N$ second devices 120 can support the privacy-preserving service provision in the case that the third device 130 subscribes multiple location-based services. The generation of the first and the second secret sub-keys may be implemented at the third device 130.

In some example embodiments, the SS scheme may be defined over a tree-based access structure (represented as *T*, referred to as an "access tree"). Specifically, the root node of the access tree has an AND gate. The left child node of the root node represents the first device 110, and the right child node has an OR gate with *N* child nodes, each representing one of the second devices 120. In some example, a bilinear map may be used to design a crypto primitive (represented as SS) to facilitate the secret sharing.

Before further discussing the generating of the secret sub-keys herein, a brief introduction of the bilinear map is provided first. It is assumed that *G1* and *G2* are two multiplicative cyclic groups of a prime order *p*, and g is a generator of *G1*. A bilinear map e over *G1* and *G2* may be represented as $G1 \times G2 \rightarrow G2$. An efficiently computable bilinear map *e*: $G1 \times G2 \rightarrow G2$ defined over the two groups satisfies the following properties:

- Bilinearity: for all *a, b* $\in$ *Zp*, there exists $e(g^a; g^b) = e(g; g)^{ab}$;

- Non-degeneracy: $e(g; g) \neq 1$; and

- Computability: for any *u, v* $\in$ *G1*, there exists an efficient algorithm to compute *e(u; v)*.

In some examples, the security of the SS scheme may be based on the Decisional Bilinear Diffie-Hellman (BDH) assumption. Basically, let *a, b, c, z* be chosen randomly from *Zp*, there exists no probabilistic polynomial time algorithm *BB* that can distinguish the tuple $(A = g^a; B = g^b; C = g^c; e(g; g)^{abc})$ from the tuple $(A = g^a; B = g^b; C = g^c; e(g; g)^z)$ with more than a negligible advantage $\varepsilon$, where the probability is computed over the randomly chosen generator *g*, the randomly chosen *a, b, c, z* in *Zp*, and the random bits consumed by *BB*.

In some example embodiments, the crypto primitive *SS* may be designed by considering the following algorithms. First, a security parameter $\lambda$ and a non-zero positive integer *N* are used to generate a public key *pk* and a master private key *msk*. The algorithm for generating the two keys may be represented as *{pk, msk}* $\leftarrow$ *setup*($\lambda$, *N*), where the *setup*() represents the algorithm used, $\lambda$ and *N* are the inputs, and *pk* and *msk* are the outputs. It defines a universe of participants *U* = {0, 1, 2, ... , *N*}, where 0, 1, ..., *N* stand for the first device 110 and a number of *N* second devices 120, respectively. For each participant *i* in *U*, a number $t_i$ is uniformly chosen from *Zp*. A number y is also chosen from *Zp*. The public key *pk* may be generated as *pk*: $\{g^{t0}, g^{t1}, ... , g^{tN}, Y = e(g, g)^y\}$, and the master private key *msk* may be generated as *msk*: $\{t_0, t_1, ... , t_N, y\}$.

The master private key *msk* may be used to generate the secret sub-keys for all the (N+1) participants in *U*. The generation of the secret sub-keys may be based on the predefined tree-based access structure *T* and the master secret key *msk*. The generation here may be may be represented as $\{sk_a, sk_b^1, ..., sk_b^N\} \leftarrow sharesGen(T, msk)$,

where the *sharesGen*() represents the algorithm used, *T* and *msk* are the inputs, and $sk_a, sk_b^1, ..., sk_b^N$ are the output secret sub-keys. The algorithm *sharesGen*() may designed to computes the secret sub-keys for all the involved participants in *U* as follows.

The algorithm first defines a polynomial $q_t(x)$ for each node *t* in *T*. Specifically, the degree $d_t$ of each polynomial is derived from the threshold value $k_t$ of the current node, i.e., $d_t = k_t - 1$. If the node *t* has an AND gate, then $k_t$ equals to the number of the children of this node. If the node *t* has an OR gate or it is a leaf node, then $k_t$ equals to 1. In addition, for the root node *r*, it sets $q_r(0) = y$. For other nodes $t(t \neq r)$ in *T*, it sets $q_t(0) = q_{parent(t)}(index(t))$, where *parent(t)* and *index(t)* represent the parent node of the node *t* and the index in all children of this parent node, respectively. Furthermore, all other polynomial parameters are chosen from *Zp* randomly. More specifically, the calculation may be as follows:

$$q_t(x) = \begin{cases} ax + y; & t \text{ is the AND gate (root node)} \\ a + y; & t \text{ is the enclave node } (i = 0) \\ 2a + y; & t \text{ is the OR gate} \\ 2a + y; & t \text{ is an LBSP node } (i \in \{1, ..., N\}) \end{cases} \qquad \text{Eq. (1)}$$

where *a* is a random number in *Zp*. Once these polynomials have been decided, the algorithm generates a key share for each participant *i* by computing $sk^i = g^{\frac{q_{t=i}(0)}{t_i}}$. Concretely, $sk_a = g^{\frac{a+y}{t_0}}$, and $sk_b^i = g^{\frac{2a+y}{t_i}} (i = 1, ..., N)$.

To encrypt the location information of the third device 130, an encryption algorithm may take the location information of the third device 130 and the public key *pk* as inputs. A random number *s* may be selected from *Zp* and used to encrypt the location information of the third device 130 in *G2* as follows:

$$ct_P = \{UE\_p \cdot Y^s; \{E_i = g^{s \cdot t_i}\}_{i \in U}\} \qquad\qquad \text{Eq. (2)}$$

where *UE_p* represents the location information of the third device 130, and the cipher text $ct_P$ represents the encrypted location information. Such encrypted location information can be recovered using a combination of the first secret sub-key $sk_a$ and any second secret sub-key $sk_b^i$ .

To decrypt the encrypted location information, a decryption algorithm may take the encrypted location information, first secret sub-key $sk_a$ and any second secret sub-key $sk_b^i$ . In order to reconstruct the location information of the third device 130 *UE_p,* a bottom-up node decryption process is performed with respect to the tree-based access structure *T.* In the case where a node *t* is a leaf node, the following equation is used:

$$F_t = \begin{cases} e(E_i, sk_a); \; i = 0 \\[2em] e(E_i, sk_b^i); \; (i \in \{1, \dots, N\}) \end{cases} \qquad\qquad \text{Eq. (3)}$$

According to the above equations and algorithms, $ct_P = \{UE\_p \cdot Y^s; \{Ei = g^{s \cdot ti}\}_{i \in U}\} = \{UE\_p \cdot e(g, g)^{ys}; \{E_i = g^{s \cdot ti}\}_{i \in U}\}$. Eq. (3) may be rewritten as:

$$F_t = \begin{cases} e(g^{s \cdot t_0}, g^{\frac{a+y}{t_0}}) = e(g,g)^{s(a+y)} \\[1em] e(g^{s \cdot t_i}, g^{\frac{2a+y}{t_i}}) = e(g,g)^{s(2a+y)} \end{cases} \qquad\qquad \text{Eq. (4)}$$

Since $e(g,g)^{2s(a+y)} / e(g,g)^{s(2a+y)} = e(g,g)^{ys} = Y^s$ , then $UE\_p \cdot Y^s / Y^s = UE\_p$ . As a result, the location information *UE_p* is reconstructed.

It would be appreciated that the above example embodiments merely provide a specific example of generating the secret sub-keys and how the secret sub-keys are can be used to encrypt and decrypt the location information. In some other example embodiments, the secret sub-keys may be determined in other manners and the encryption and decryption may be implemented accordingly.

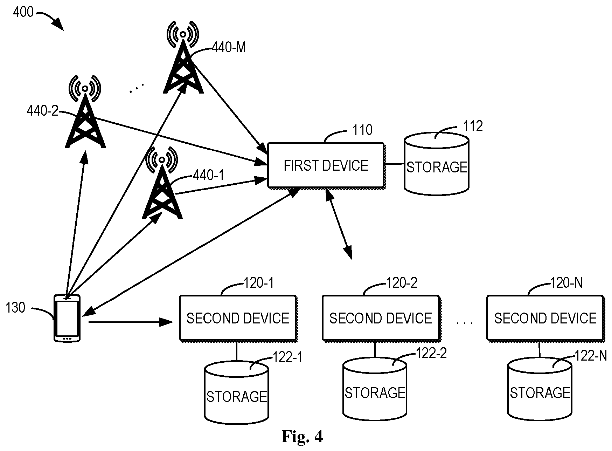

Some example embodiments for the privacy-preserving service provision have been discussed above. In some example embodiments of the present disclosure, a solution for privacy-preserving positioning of the third device 130 is proposed, which will be described in detail below with reference to Figs. 4-6.

***Example Environment for Privacy-preserving Positioning***

There are a large variety of device positioning schemes for a third device. In some applications, instead of positioning at the third device itself, the device positioning is preferred to be implemented through one or more edge devices, for example, one or more network devices. The device positioning based on edge devices can provide great advantages with regard to accuracy, reliability and effectiveness.

More specifically, first, global positioning system (GPS) based positioning could be hacked because an adversary can easily simulate GPS signals with strong power to mislead the GPS positioning function at the third device. Second, GPS positioning consumes much battery power of the third device due to the receiving and processing of the GPS signals, which is a big shortcoming of this kind of positioning techniques. Third, applying the edge devices for positioning can offer high positioning accuracy as required. The involvement of multiple edge devices can further ensure positioning reliability.

Meanwhile, it is possible to put positioning computation at a powerful remote device (such as a cloud server), thus greatly reducing computation load of the third device and saving its power. In this situation, the location-related data generated by the edge devices may need to be transferred to the powerful remote device for further processing in order to determine the final and accurate location information of the third device 130.

Fig. 4 illustrates an example communication environment 400 in which some further example embodiments of the present disclosure can be implemented. As compared with the communication environment 100 of Fig. 1, the communication environment 400 further includes one or more (a number of M) fourth devices 440-1, 440-2, . . . 440-M, where M is an integer larger than or equal to one. The fourth devices 440-1, 440-2, . . . 440-M are collectively or individually referred to as fourth devices 440 for purpose of discussion.

The one or more fourth devices 440 are configured to assist in positioning the third device 130. In some example embodiments, the fourth device(s) 440 is configured to determine and provides location-related information associated with the third device 130. The fourth device(s) 440 transmits the location-related information to the first device 110 which is configured to determine the location information of the third device 130 based on the location-related information. In the illustrated example embodiments, the first device 110 can aggregate the location-related information provided by one or more fourth devices 440 in order to offer accurate and reliable location information for the third device 130. In example embodiments, the privacy of the location information is preserved in the environment 400.

In the illustrated example of Fig. 4, the fourth device(s) 440 are illustrated as network devices, such as base stations. In other examples, one or more fourth devices 440 may include other communication devices. Although it is illustrated as being implemented at the same first device 110, it would be appreciated that the privacy-preserving positioning and the privacy-preserving service provision may be implemented at different devices.

Although each is illustrated as one device in Fig.4, the functionalities of the first device, the second devices, and/or the third device described herein each may be implemented by one or more physical/virtual devices/systems. It is noted that the terms "first device," "second device," "third device," and "fourth device" are used for ease of description only.

It is to be understood that the number of devices and their connections shown in Fig. 1 are only for the purpose of illustration without suggesting any limitation. The environment 400 may include any suitable number of devices adapted for implementing embodiments of the present disclosure. Although not shown, it should be appreciated that one or more third devices may be included in the environment 400 which require the privacy-preserving positioning, and one or more second devices may be omitted from the environment.

The signaling flow among the devices illustrated in Fig. 4 will be described in detail in the following.

### *Example Embodiments of Privacy-preserving Positioning*

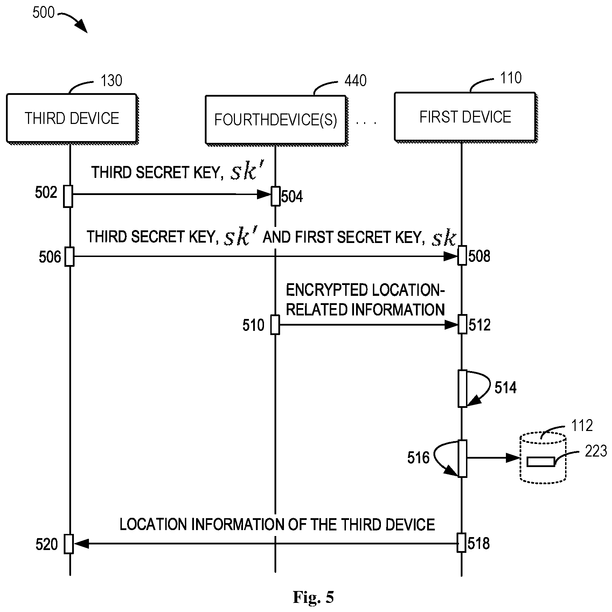

Reference is now made to Fig. 5, which shows a signaling flow 500 for privacy-preserving positioning in accordance with some example embodiments of the present disclosure. For the purpose of discussion, the signaling flow 500 will be described with reference to Fig. 4. The signaling flow 500 may involve a first device 110, M fourth devices 440-1, 440-2, . . . , 440-M, and a third device 130 in Fig. 1.

In the signaling flow 500, the third device 130 transmits 502 a secret key (referred to as a "third secret key" for the purpose of discussion, represented as $sk'$) to the one or more fourth device(s) 440. Each of the one or more fourth device(s) 440 receives 504 the third secret key and may store the third secret key.

In some example embodiments, the one or more fourth device(s) 440 may be trusted by the third device 130 as the fourth device(s) 440 are normally deployed as system design. In some example embodiments, the first device 110 may not be fully trusted by the third device 130. The first device 110 may be hacked or intruded, or suffer from internal attacks. Thus, the data/information stored in the first device 110 could be leaked if without essential protection, e.g., encryption. The third secret key is used by the one or more fourth device(s) 440 to encrypt the location-related information associated with the third device 130.

In some example embodiments, the third device 130 may transmit a pseudonym of the third device 130 to the fourth device(s) 440. The pseudonym of the third device 130 is used to identify the third device 130. In some examples, the pseudonym may be any kind of identifier or identification information other than an actual identification or name associated with the third device 130.

In some example embodiments, the location-related information may include any information that can be useful in determining the location information of the third device 130. Example location-related information may include positioning measurements performed within a network with respect to the third device 130, including, for example, Time of Arrival (ToA), Direction of Arrival (DoA), and/or the like.

The location-related information may alternatively or additionally include estimated locations (e.g., an estimate of the latitude, longitude and/or altitude of a device and, in some implementations, the time and/or estimated or calculated uncertainty or accuracy of the location estimate), reference locations (e.g., a reference location previously used to locate the third device 130), and/or the like. As described herein, the location-related information provisioned from the fourth devices 440 may be utilized in location determination techniques or to otherwise improve position and/or location continuity and/or other performance metrics of a location determination. Some or all of the location-related information collected by each fourth device 440 may be the same or different.

In some example embodiments, the third device 130 may transmit wireless signals, such as reference or beacon signals, to the fourth device(s) 440. The fourth device(s) 440 may attempt to detect and measure the wireless signals from the third device 130 in order to determine the location-related information.

The third device 130 also transmits 506 the third secret key $sk'$ and the first secret key $sk$ to the first device 110. In some example embodiments, to protect the first and the third secret keys, the third device 130 may transmit the first and the third secret keys to the first device 110 via a secure communication channel (sometimes referred to as a "second secure communication channel" for the purpose of discussion). For example, the first device 110 may host a TEE attested by the third device 130. The second secure communication channel may be established between the TEE in the first device 110 and the third device 130. The communication and execution based on the TEE will be illustrated in detail below with reference to Fig. 5.

In some example embodiments, the third device 130 may transmit a pseudonym of the third device 130 to the first device 110 for the first device 110 to identify that the first and the third secret keys are associated with the third device 130.

Upon collecting location-related information associated with the third device 130 by a fourth device 440, the fourth device 440 encrypts the location-related information using the third secret key *sk'* and transmits 510 the encrypted location-related information to the first device 110. By encrypting the location-related information, the privacy of the location information of the third device 130 can be preserved.

In some example embodiments, the third device 130 may transmit an identification of the first device 110 to the fourth device(s) 440. As such, the fourth device(s) 440 may be able to identify the first device 110 to which it will provide the location-related information associated with the third device 130. In some example embodiments, the fourth device(s) 440 may be configured, by default or otherwise, to communicate the location-related information to the first device 110.

By receiving 508 the third secret key *sk'* and the first secret key *sk* from the third device 130 and receiving 512 the encrypted location-related information, the first device 110 is able to decrypt the received encrypted location-related information using the third secret key *sk'*. If more than one fourth device 440 transmits their encrypted location-related information, the first device 110 may likewise decrypt all the encrypted location-related information.

In some example embodiments, the fourth device(s) 440 may transmit the encrypted location-related information in association with the pseudonym of the third device 130 to the first device 110. The first device 110 may detect the pseudonym of the third device 130 transmitted in association with the encrypted location-related information and thus may decide to use the third secret key *sk'* associated with the third device 130 to perform the decryption.

The first device 110 further determines 514 location information of the third device 130 based on the decrypted location-related information. Usually a fourth device 440 is also able to estimate the location of the third device 140, but such estimation may not be accurate as it could be impacted by interference, attacks, interruption, and so on. The device positioning based on the location-related information collected from multiple sources can enable accurate positioning determination. The first device 110 may eliminate noise and unreal data from the location-related information in order to produce more accurate location information of the third device 130. In some example embodiments, in addition to the location-related information from the fourth device(s) 440, the first device 110 may obtain information from other sources, such as the third device 130, to facilitate the device positioning.

The first device 110 encrypts 516 the determined location information of the third device using the first secret key *sk* in order to protect the positioning privacy. In some examples, the encrypted location information may be stored in the storage system 112 which is accessible by the first device 110. In other examples, the encrypted location information 223 may be stored in internal storage devices of the first device 110 and/or in other storage devices/systems.

The first device 110 transmits 518 the determined location information of the third device 130 to the third device 130, and the third device 130 receives 520 its location information. In some example embodiments, the location information may be transmitted via the second secure communication channel established between the third device 130 and the TEE in the first device 110.

In some example embodiments, the third device 130 is allowed to obfuscate its location information by informing the fourth device(s) 440 obfuscation information to add to the location-related information. The obfuscation information may be any information or sequence known by the third device 130 but is unknown to the first device 110. The fourth device(s) 440 may obfuscate the location-related information with the obfuscation information to obtain obfuscated location-related information. The fourth device(s) 440 transmits the obfuscated location-related information to the first device 110 to determine the location information of the third device 130.

The resulting location information may be obfuscated at the first device 110. As such, the third device 130 can protect the real location information from being reveled to the first device 110. Although the TEE can provide a high level of security, considering the possible side channel attacks on the TEE, hiding the real location information from the first device 110 can further improve the positioning privacy. The first device 110 may transmit the obfuscated location information to the third device 130. The third device 130 may recover its location information from the obfuscated location information based on the obfuscation information.

It would be appreciated that some operations in the signaling flow are optional. For example, the determined location information of the third device 130 may not be encrypted and stored by the first device 110 but is directly provided to the third device 130. In such an example, the first secret key *sk* may not be provided by the third device 130 to the first device 110. As another example, the location information of the third device 130 may not be provided for the first device 110. The encrypted location information may be maintained at the first device or provided for other devices for the privacy-preserving service provision as described above.

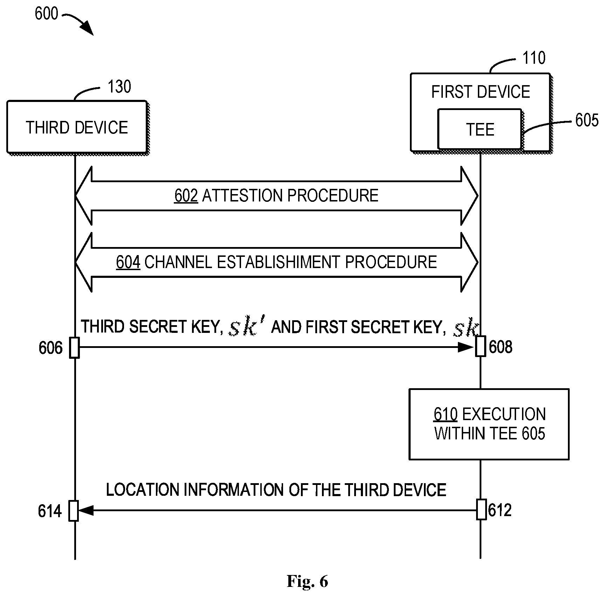

As mentioned above, a TEE may be created in the first device 110 to enable secure communications with the third device 130 and to protect sensitive information from being exposed by the first device 110. Fig. 6 illustrates a signaling flow 600 for secure communication and execution in accordance with some example embodiments of the present disclosure. In the example of Fig. 6, a TEE 605 is created and hosted in the first device 110. The signaling flow 600 involves the secure communication between the third device 130 and the TEE 605 and trusted operations within the TEE 605 at the first device 110.

As used herein, the TEE 305 as described with reference Fig. 3 may sometimes be referred to as a first TEE and the TEE 605 as described with reference Fig. 5 may sometimes be referred to as a second TEE. In some example embodiments, the first and second TEEs may be separate TEEs or may be the same TEE in the first device 110.

In the signaling flow 600, an attestation procedure 602 is performed between the third device 130 and the TEE 605 running in the first device 110. Through the attestation procedure 602, the TEE 605 is attested by the third device 130 and may be treated as trusted by the third device 130.

After the attestation procedure 602, a channel establishment procedure 604 is performed between the third device 130 and the TEE 605 to establish the second secure communication channel between the third device 130 and the TEE 605. The communications between the third device 130 and the TEE 605 may be protected by applying any secure communication protocols, either available currently or to be developed in the future.

The third device 130 transmits 606 the third secret key $sk'$ and the first secret key $sk$ to the first device 110 via the established second secure communication channel. The TEE 605 in the first device 110 receives 608 the third secret key $sk'$ and the first secret key $sk$ from the third device 130. Through the second secure communication channel, the first and the third secret sub-keys may not be leaked, stolen, or tampered during the communication. The first and the third secret sub-keys may be stored in the protected memory for future use or in an outside untrusted storage area outside the TEE 605 for future recovery.

In some example embodiments, executions of operations at the first device 110 is performed 610 within the TEE 605, including the decryption of the encrypted location-related information from the fourth device(s) 440 and/or the determination of the location information as described above. The first device 110 transmits 612 the determined location information to the third device 130, and the third device 130 receives 614 its location information via the second secure communication channel.

It would be appreciated that some detailed operations described in the signaling flow 600 are not illustrated in the signaling flow 600. By means of the TEE 605, the sensitive secret key, location-related information, and/or location information may not be exposed to other parts of the first device 110 outside the TEE 605. In some example embodiments, some countermeasures may be applied to overcome vulnerabilities (e.g., side channel attacks) of the TEE 605 so as to further improve the security at the TEE 605.

### *Example Processes implemented at Devices*

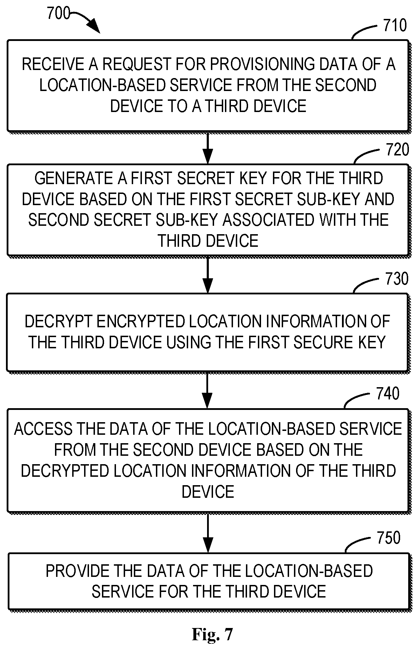

Fig. 7 shows a flowchart of an example process 700 implemented at a first device in accordance with some example embodiments of the present disclosure. For the purpose of discussion, the process 700 will be described from the perspective of the first device 110 with respect to Fig. 1 and Fig. 4.

At block 710, the first device 110 receives, from a second device 120, a request for provisioning data of a location-based service from the second device 120 to a third device 130. The request comprises first secret sub-key associated with the third device 130. The first secret sub-key may be generated by the third device 130 and provided to the second device 120. In some example embodiments, the third device 130 may generate a plurality of shares of first secret sub-key to provide to a plurality of second devices 120 from which the third device 130 subscribes location-based services.

At block 720, the first device 110 generates a first secret key for the third device based on the first secret sub-key and second secret sub-key associated with the third device 130. In some example embodiments, the first device 110 receives the second secret sub-key from the third device 130.

In some example embodiments, the first device 110 may cause a first TEE to be attested by the third device 130 as trusted and establish a first secure communication channel between the first tee and the third device 130. The second secret sub-key may be sent from the third device 130 via the first secure communication channel.

At block 730, the first device 110 decrypts encrypted location information of the third device using the first secure key.

At block 740, the first device 110 accesses the data of the location-based service from the second device 120 based on the decrypted location information of the third device 130. In some example embodiments, the first device 110 may receive a second secret key from the second device 120. The data of the location-based service may be encrypted using the second secret key. The first device 110 may be able to access the data of the location-based service based on the second secret key, the data of the location-based service being encrypted using the second secret key.

At block 750, the first device 110 provides the data of the location-based service to the third device 130. In some example embodiments, the first device 110 may transmit the data of the location-based service to the third device 130 via the first secure communication channel.

In some example embodiments, the generating of the first secret key, the decrypting of the encrypted location information, and the accessing of the data of the location-based service may be performed within the first TEE.

In some example embodiments, the first device 110 may discard the first secret key after the encrypted location information is decrypted.

In some example embodiments, the first device 110 may provide privacy-preserving positioning for the third device. More specifically, the first device 110 may receive a third secret key from the third device 130 and receive, from at least one fourth device 440, encrypted location-related information associated with the third device 130. The first device 110 may decrypt the encrypted location-related information associated with the third device 130 using the third secret key and determine the location information of the third device 130 based on the decrypted location-related information.

In some example embodiments, the first device 110 may cause a second TEE to be attested by the third device as trusted, establish a second secure communication channel between the second TEE and the third device, receive the first secret key from the third device via the second secure communication channel, and encrypt, within the second TEE, the determined location information of the third device using the first secret key.

In some example embodiments, the first device 110 may receive the third secret key from the third device via the second secure communication channel. In some example embodiments, the first device 110 may transmit, to the third device 130, the location information of the third device via the second secure communication channel.

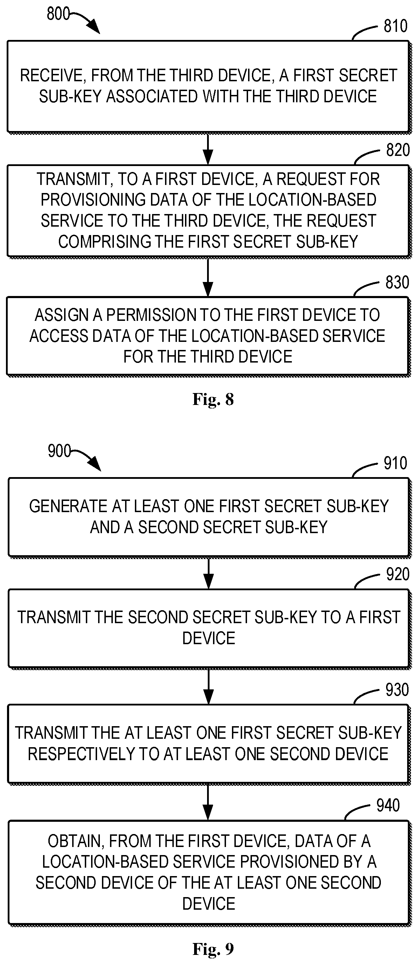

Fig. 8 shows a flowchart of an example process 800 implemented at a second device in accordance with some example embodiments of the present disclosure. For the purpose of discussion, the process 800 will be described from the perspective of the second device 120 with respect to Fig. 1 and Fig. 4.

At block 810, the second device 120 receives, from a third device 130, a first secret sub-key associated with the third device 130. The third device 130 is a device subscribing a location-based service from the second device 120.

At block 820, the second device 120 transmits, to a first device 110, a request for provisioning data of the location-based service to the third device 130, the request comprising the first secret sub-key.

At block 830, the second device 120 assigns a permission to the first device 110 to access data of the location-based service to the third device 130. In some example embodiments, the second device 120 may transmit a second secret key to the first device 110, the data of the location-based service being encrypted using the second secret key. With the second secret key, the second device 120 may be able to access and decrypt the encrypted data of the location-based service.

In some example embodiments, the second device 120 may attest a first trusted execution environment in the first device as trusted, establish a third secure communication channel between the second device and the first trusted execution environment comprised in the first device, and transmit the request to the first device via the third secure communication channel.

Fig. 9 shows a flowchart of an example process 900 implemented at a third device in accordance with some example embodiments of the present disclosure. For the purpose of discussion, the process 900 will be described from the perspective of the third device 130 with respect to Fig. 1 and Fig. 4.

At block 910, the third device 130 generates at least one first secret sub-key and a second secret sub-key. A first secret key, which is used to encrypt location information of the third device, can be generated based on the second secret sub-key and one of the at least one first secret sub-key.

At block 920, the third device 130 transmits the second secret sub-key to a first device 110, and at block 930, the third device 130 transmits the at least one first secret sub-key respectively to at least one second device 120 from which the third device 130 subscribes at least one location-based service respectively.

At block 940, the third device 130 obtains, from the first device 110, data of a location-based service provisioned by a second device 120. The data of the location-based service is based on the location information of the third device 130 that is decrypted using the first secret key.

In some example embodiments, the third device 130 may attest a first TEE in the first device 110 as trusted and establish a first secure communication channel between third device and the first TEE. The third device 130 may transmit the second secret sub-key to the first TEE of the first device 110 via the first secure communication channel.

In some example embodiments, the third device 130 may transmit a third secret key to at least one fourth device 440 for encrypting location-related information associated with the third device 130. The encrypted location-related information of the third device 130 is to be transmitted to the first device 110 for determining the location information of the third device 130. In some example embodiments, the third device 130 may transmit the third secret key and the first secret key to the first device 110

In some example embodiments, the third device 130 may transmit obfuscation information to the at least one fourth device to obfuscate the location-related information, and receive obfuscated location information of the third device from the first device. The third device 130 may recover its location information from the obfuscated location information based on the obfuscation information.

## *Example Apparatuses*

In some example embodiments, a first apparatus capable of performing any of the process 700 (for example, the first device 110) may comprise means for performing the respective operations of the process 700. The means may be implemented in any suitable form. For example, the means may be implemented in a circuitry or software module. The first apparatus may be implemented as or included in the first device 110. In some example embodiments, the means may comprise a processor and a memory.

In some example embodiments, the first apparatus comprises means for receiving, from a second apparatus (implemented at or included as a second device 120), a request for provisioning data of a location-based service from the second apparatus to a third apparatus (implemented at or included as a third device 130), the request comprising first secret sub-key associated with the third apparatus; means for generating a first secret key for the third apparatus based on the first secret sub-key and second secret sub-key associated with the third apparatus; means for decrypting encrypted location information of the third apparatus using the first secure key; means for accessing the data of the location-based service from the second apparatus based on the decrypted location information of the third apparatus; and means for providing the data of the location-based service to the third apparatus.

In some example embodiments, the means for accessing the data of the location-based service comprises means for receiving a second secret key from the second device, the data of the location-based service being encrypted using the second secret key; and; and means for accessing the data of the location-based service based on the second secret key.

In some example embodiments, the first apparatus may comprise means for causing a first trusted execution environment in the first device to be attested by the third apparatus as trusted; means for establishing a first secure communication channel between the first trusted execution environment and the third apparatus, and means for receiving the second secret sub-key from the third apparatus via the first secure communication channel.

In some example embodiments, the generation of the first secret key, the decrypting of the encrypted location information, and the accessing of the data of the location-based service are performed within the first trusted execution environment.

In some example embodiments, the first apparatus may comprise means for transmitting the data of the location-based service to the third apparatus via the first secure communication channel.

In some example embodiments, the first apparatus may comprise means for discarding the first secret key after the encrypted location information is decrypted.

In some example embodiments, the first apparatus may further comprise means for receiving a third secret key from the third apparatus; means for receiving, from at least one fourth apparatus, encrypted location-related information associated with the third apparatus; means for receiving decrypting the encrypted location-related information associated with the third apparatus using the third secret key, and means for determining the location information of the third apparatus based on the decrypted location-related information.

In some example embodiments, the first apparatus may further comprise means for causing a second trusted execution environment in the first device to be attested by the third apparatus as trusted; means for establishing a second secure communication channel between the second trusted execution environment and the third apparatus; means for receiving the first secret key from the third apparatus via the second secure communication channel; and means for encrypting, within the second trusted execution environment, the determined location information of the third apparatus using the first secret key.

In some example embodiments, the means for receiving the third secret key may comprise means for receiving the third secret key from the third apparatus via the second secure communication channel.

In some example embodiments, the first apparatus may further comprise means for transmitting, to the third apparatus, the location information of the third apparatus is the second secure communication channel.

In some example embodiments, a second apparatus capable of performing any of the process 800 (for example, the second device 120) may comprise means for performing the respective operations of the process 800. The means may be implemented in any suitable form. For example, the means may be implemented in a circuitry or software module. The second apparatus may be implemented as or included in the second device 120. In some example embodiments, the means may comprise a processor and a memory.

In some example embodiments, the second apparatus comprises means for receive, from a third apparatus (implemented at or included as a third device 130), a first secret sub-key associated with the third apparatus, the third apparatus subscribing a location-based service from the second apparatus; means for transmitting, to a first apparatus (implemented at or included as a first device 110), a request for provisioning data of the location-based service to the third apparatus, the request comprising the first secret sub-key; and means for assigning a permission to the first apparatus to access data of the location-based service for the third apparatus.

In some example embodiments, the means for assigning the permission to the first apparatus may comprise means for transmitting, to the first apparatus, a second secret key used for encrypting the data of the location-based service.

In some example embodiments, the means for transmitting the request to the first apparatus comprises means for attesting a first trusted execution environment in the first apparatus as trusted; means for establishing a third secure communication channel between the second apparatus and the first trusted execution environment comprised in the first apparatus; and means for transmitting the request to the first apparatus via the third secure communication channel.

In some example embodiments, a third apparatus capable of performing any of the process 900 (for example, the third device 130) may comprise means for performing the respective operations of the process 900. The means may be implemented in any suitable form. For example, the means may be implemented in a circuitry or software module. The third apparatus may be implemented as or included in the third device 130. In some example embodiments, the means may comprise a processor and a memory.

In some example embodiments, the third apparatus may comprise means for generating at least one first secret sub-key and a second secret sub-key, a first secret key being based on the second secret sub-key and one of the at least one first secret sub-key, and location information of the third device to be encrypted using the first secret key; means for transmitting the second secret sub-key to a first apparatus (implemented as or included in the first device 110); means for transmitting the at least one first secret sub-key respectively to at least one second apparatus (implemented as or included in at least one second device 120), the third apparatus subscribing at least one location-based service respectively from the at least one second apparatus; and means for obtaining, from the first apparatus, data of a location-based service provisioned by a second apparatus of the at least one second apparatus, the data of the location-based service being based on the location information of the third apparatus.

In some example embodiments, the means for transmitting the second secret sub-key comprises means for attesting a first trusted execution environment in the first apparatus as trusted; means for establishing a first secure communication channel between third apparatus and the first trusted execution environment; and means for transmitting the second secret sub-key to the first trusted execution environment of the first apparatus via the first secure communication channel.

In some example embodiments, the third apparatus may further comprise means for transmitting a third secret key to at least one fourth device for encrypting location-related information associated with the third device, the encrypted location-related information of the third device to be transmitted to the first device for determining the location information of the third device; and means for transmitting the third secret key and the first secret key to the first device.

In some example embodiments, the third apparatus may further comprise means for transmitting obfuscation information to the at least one fourth apparatus to obfuscate the location-related information; means for receiving obfuscated location information of the third apparatus from the first apparatus; and means for recovering the location information of the third apparatus from the obfuscated location information based on the obfuscation information.

### *Example Device and Computer-readable Medium*

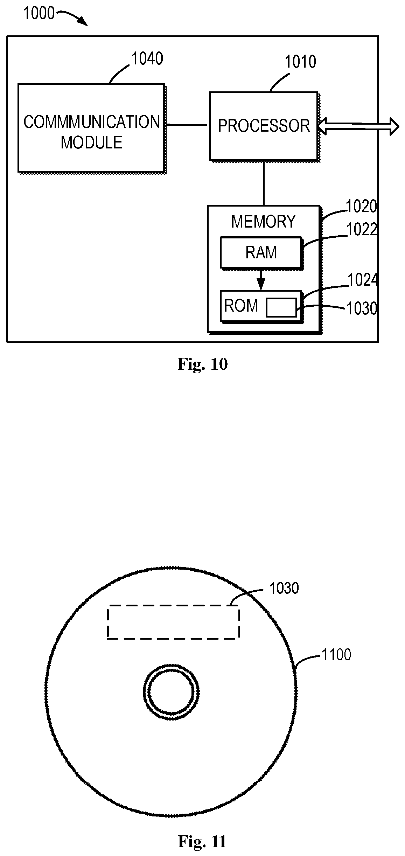

Fig. 10 is a simplified block diagram of a device 1000 that is suitable for implementing example embodiments of the present disclosure. The device 1000 may be provided to implement a communication device, for example, the first device 110, the second device 120, the third device 130, or the fourth device 440 as shown in Fig. 1 and Fig. 4. As shown, the device 1000 includes one or more processors 1010, one or more memories 1020 coupled to the processor 1010, and one or more communication modules 1040 coupled to the processor 1010.

The communication module 1040 is for bidirectional communications. The communication module 1040 has one or more communication interfaces to facilitate communication with one or more other modules or devices. The communication interfaces may represent any interface that is necessary for communication with other network elements. In some example embodiments, the communication module 1040 may include at least one antenna.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 1022 and other volatile memories that will not last in the power-down duration.

A computer program 1030 includes computer executable instructions that are executed by the associated processor 1010. The program 1030 may be stored in the memory, e.g., ROM 1024. The processor 1010 may perform any suitable actions and processing by loading the program 1030 into the RAM 1022.

The example embodiments of the present disclosure may be implemented by means of the program 1030 so that the device 1000 may perform any process of the disclosure as discussed with reference to Figs. 1 to 9. The example embodiments of the present disclosure may also be implemented by hardware or by a combination of software and hardware.

In some example embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. The computer readable medium may include any types of tangible non-volatile storage, such as ROM, EPROM, a flash memory, a hard disk, CD, DVD, and the like. Fig. 11 shows an example of the computer readable medium 1100 which may be in form of CD, DVD or other optical storage disk. The computer readable medium has the program 1030 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target physical or virtual processor, to carry out any of the methods as described above with reference to Figs. 2 to 7. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be interpreted as requiring that such operations should be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. A first device (110) comprising:

means for receiving (710), from a second device (120), a request for provisioning data of a location-based service from the second device (120) to a third device (130), the request comprising first secret sub-key associated with the third device (130);
means for generating (720) a first secret key for the third device (130) based on the first secret sub-key and second secret sub-key associated with the third device (130);
means for decrypting (730) encrypted location information of the third device (130) using the first secure key;
means for accessing (740) the data of the location-based service from the second device (120) based on the decrypted location information of the third device (130); and
means for providing (750) the data of the location-based service to the third device (130).

2. The first device (110) of claim 1, wherein means for accessing (740) the data of the location-based service comprising:

means for receiving a second secret key from the second device (120), the data of the location-based service being encrypted using the second secret key; and
means for accessing the data of the location-based service based on the second secret key.

3. The first device (110) of claim 1, further comprising:

means for causing a first trusted execution environment in the first device (110) to be attested by the third device (130) as trusted;
means for establishing a first secure communication channel between the first trusted execution environment and the third device (130); and
receive the second secret sub-key from the third device (130) via the first secure communication channel.

4. The first device (110) of claim 3, wherein the generating (720) of the first secret key, the decrypting (730) of the encrypted location information, and the accessing (740) of the data of the location-based service are performed within the first trusted execution environment.

5. The first device (110) of claim 3, wherein the means for providing (750) the data of the location-based service comprises:
means for transmitting the data of the location-based service to the third device (130) via the first secure communication channel.

6. The first device (110) of claim 1, wherein the first device (110) further comprises:
means for discarding the first secret key after the encrypted location information is decrypted.

7. The first device (110) of claim 1, wherein the first device (110) further comprises:

means for receiving a third secret key from the third device (130);
means for receiving, from at least one fourth device (440), encrypted location-related information associated with the third device (130);
means for decrypting the encrypted location-related information associated with the third device (130) using the third secret key; and
means for determining the location information of the third device (130) based on the decrypted location-related information.

8. The first device (110) of claim 7, wherein the first device (110) further comprises:

means for causing a second trusted execution environment in the first device (110) to be attested by the third device (130) as trusted;
means for establishing a second secure communication channel between the second trusted execution environment and the third device (130);
means for receiving the first secret key from the third device (130) via the second secure communication channel; and

means for encrypting, within the second trusted execution environment, the determined location information of the third device (130) using the first secret key.

9. A third device (130), comprising:

means for generating (910) at least one first secret sub-key and a second secret sub-key, a first secret key being based on the second secret sub-key and one of the at least one first secret sub-key, and location information of the third device (130) to be encrypted using the first secret key;

means for transmitting (920) the second secret sub-key to a first device (110);

means for transmitting (930) the at least one first secret sub-key respectively to at least one second device (120), the third device (130) subscribing at least one location-based service respectively from the at least one second device (120); and

means for obtaining (940), from the first device (110), data of a location-based service provisioned by a second device (120) of the at least one second device (120), the data of the location-based service being based on the location information of the third device (130).

10. The third device (130) of claim 9, wherein the means for transmitting (920) the second secret sub-key comprises:

attesting a first trusted execution environment in the first device (110) as trusted;

establishing a first secure communication channel between third device (130) and the first trusted execution environment; and

transmitting the second secret sub-key to the first trusted execution environment of the first device (110) via the first secure communication channel.

11. The third device (130) of claim 9, wherein the third device (130) further comprises:

means for transmitting a third secret key to at least one fourth device (440) for encrypting location-related information associated with the third device (130), the encrypted location-related information of the third device (130) to be transmitted to the first device (110) for determining the location information of the third device (130); and

means for transmitting the third secret key and the first secret key to the first device (110).

12. The third device (130) of claim 9, wherein the third device (130) further comprises:

means for transmitting obfuscation information to the at least one fourth device (440) to obfuscate the location-related information;

means for receiving obfuscated location information of the third device (130) from the first device (110); and

means for recovering the location information of the third device (130) from the obfuscated location information based on the obfuscation information.

13. A method comprising:

receiving (710), at a first device (110) and from a second device (120), a request for provisioning data of a location-based service from the second device (120) to a third device (130), the request comprising first secret sub-key associated with the third device (130);

generating (720) a first secret key for the third device based on the first secret sub-key and second secret sub-key associated with the third device (130);

decrypting (730) encrypted location information of the third device (130) using the first secure key;

accessing (740) the data of the location-based service from the second device (120) based on the decrypted location information of the third device (130); and

providing (750) the data of the location-based service to the third device (130).

14. A method comprising:

generating (910), at a third device (130), at least one first secret sub-key and a second secret sub-key, a first secret key being based on the second secret sub-key and one of the at least one first secret sub-key, and location information of the third device (130) to be encrypted using the first secret key;

transmitting (920) the second secret sub-key to a first device (110);

transmitting (930) the at least one first secret sub-key respectively to at least one second device (120), the third device (130) subscribing at least one location-based service respectively from the at least one second device (120); and

obtaining (940), from the first device (110), data of a location-based service provisioned by a second device (120) of the at least one second device (120), the data of the location-based service being based on the location information of the third device (130).

15. A computer program (1030) comprising instructions for causing an apparatus to perform at least the method of any of claims 13 and 14.


**Patentansprüche**

1. Erste Vorrichtung (110), die Folgendes umfasst:

   Mittel zum Empfangen (710) einer Anforderung zum Bereitstellen von Daten eines standortbasierten Dienstes von einer zweiten Vorrichtung (120) für eine dritte Vorrichtung (130) von der zweiten Vorrichtung (120), wobei die Anforderung einen ersten Geheimnisunterschlüssel umfasst, der mit der dritten Vorrichtung (130) verknüpft ist;
   Mittel zum Erzeugen (720) eines ersten Geheimnisschlüssels für die dritte Vorrichtung (130) auf Basis des ersten Geheimnisunterschlüssels und eines zweiten Geheimnisunterschlüssels, die mit der dritten Vorrichtung (130) verknüpft sind;
   Mittel zum Entschlüsseln (730) von verschlüsselten Standortinformationen der dritten Vorrichtung (130) unter Verwendung des ersten sicheren Schlüssels;
   Mittel zum Zugreifen (740) auf die Daten des standortbasierten Dienstes von der zweiten Vorrichtung (120) auf Basis der entschlüsselten Standortinformationen der dritten Vorrichtung (130); und
   Mittel zum Bereitstellen (750) der Daten des standortbasierten Dienstes für die dritte Vorrichtung (130).

2. Erste Vorrichtung (110) nach Anspruch 1, wobei Mittel zum Zugreifen (740) auf die Daten des standortbasierten Dienstes Folgendes umfassen:

   Mittel zum Empfangen eines zweiten Geheimnisschlüssels von der zweiten Vorrichtung (120), wobei die Daten des standortbasierten Dienstes unter Verwendung des zweiten Geheimnisschlüssels verschlüsselt sind; und
   Mittel zum Zugreifen auf die Daten des standortbasierten Dienstes auf Basis des zweiten Geheimnisschlüssels.

3. Erste Vorrichtung (110) nach Anspruch 1, die ferner Folgendes umfasst:

   Mittel zum Veranlassen, dass eine erste vertrauenswürdige Ausführungsumgebung in der ersten Vorrichtung (110) von der dritten Vorrichtung (130) als vertrauenswürdig bestätigt wird;
   Mittel zum Aufbauen eines ersten sicheren Kommunikationskanals zwischen der ersten vertrauenswürdigen Ausführungsumgebung und der dritten Vorrichtung (130); und
   Empfangen des zweiten Geheimnisunterschlüssels via den ersten sicheren Kommunikationskanals von der dritten Vorrichtung (130).

4. Erste Vorrichtung (110) nach Anspruch 3, wobei das Erzeugen (720) des ersten Geheimnisschlüssels, das Entschlüsseln (730) der verschlüsselten Standortinformationen und das Zugreifen (740) auf die Daten des standortbasierten Dienstes in der ersten vertrauenswürdigen Ausführungsumgebung durchgeführt werden.

5. Erste Vorrichtung (110) nach Anspruch 3, wobei die Mittel zum Bereitstellen (750) der Daten des standortbasierten Dienstes Folgendes umfassen:
   Mittel zum Übertragen der Daten des standortbasierten Dienstes via den ersten sicheren Kommunikationskanal zur dritten Vorrichtung (130).

6. Erste Vorrichtung (110) nach Anspruch 1, wobei die erste Vorrichtung (110) ferner Folgendes umfasst:
   Mittel zum Verwerfen des ersten Geheimnisschlüssels, nachdem die verschlüsselten Standortinformationen entschlüsselt wurden.

7. Erste Vorrichtung (110) nach Anspruch 1, wobei die erste Vorrichtung (110) ferner Folgendes umfasst:

Mittel zum Empfangen eines dritten Geheimnisschlüssels von der dritten Vorrichtung (130);

Mittel zum Empfangen von verschlüsselten standortbezogenen Informationen, die mit der dritten Vorrichtung (130) verknüpft sind, von mindestens einer vierten Vorrichtung (440);

Mittel zum Entschlüsseln der verschlüsselten standortbezogenen Informationen, die mit der dritten Vorrichtung (130) verknüpft sind, unter Verwendung des dritten Geheimnisschlüssels; und

Mittel zum Bestimmen der Standortinformationen der dritten Vorrichtung (130) auf Basis der entschlüsselten standortbezogenen Informationen.

8. Erste Vorrichtung (110) nach Anspruch 7, wobei die erste Vorrichtung (110) ferner Folgendes umfasst:

Mittel zum Veranlassen, dass eine zweite vertrauenswürdige Ausführungsumgebung in der ersten Vorrichtung (110) von der dritten Vorrichtung (130) als vertrauenswürdig bestätigt wird;

Mittel zum Aufbauen eines zweiten sicheren Kommunikationskanals zwischen der zweiten vertrauenswürdigen Ausführungsumgebung und der dritten Vorrichtung (130);

Mittel zum Empfangen des ersten Geheimnisschlüssels von der dritten Vorrichtung (130) via den zweiten sicheren Kommunikationskanal; und

Mittel zum Verschlüsseln der bestimmten Standortinformationen der dritten Vorrichtung (130) unter Verwendung des ersten Geheimnisschlüssels in der zweiten vertrauenswürdigen Ausführungsumgebung.

9. Dritte Vorrichtung (130), die Folgendes umfasst:

Mittel zum Erzeugen (910) von mindestens einem ersten Geheimnisunterschlüssel und einem zweiten Geheimnisunterschlüssel, wobei ein erster Geheimnisschlüssel auf dem zweiten Geheimnisunterschlüssel und einem des mindestens einen ersten Geheimnisunterschlüssels basiert, und von Standortinformationen der dritten Vorrichtung (130), die unter Verwendung des ersten Geheimnisschlüssels zu verschlüsseln sind;

Mittel zum Übertragen (920) des zweiten Geheimnisunterschlüssels zu einer ersten Vorrichtung (110);

Mittel zum Übertragen (930) des mindestens einen ersten Geheimnisunterschlüssels jeweils zu mindestens einer zweiten Vorrichtung (120), wobei die dritte Vorrichtung (130) mindestens einen standortbasierten Dienst jeweils von der mindestens einen zweiten Vorrichtung (120) abonniert; und

Mittel zum Erhalten (940) von Daten eines standortbasierten Dienstes, die von einer zweiten Vorrichtung (120) der mindestens einen zweiten Vorrichtung (120) bereitgestellt werden, von der ersten Vorrichtung (110), wobei die Daten des standortbasierten Dienstes auf den Standortinformationen der dritten Vorrichtung (130) basieren.

10. Dritte Vorrichtung (130) nach Anspruch 9, wobei die Mittel zum Übertragen (920) des zweiten Geheimnisunterschlüssels Folgendes umfassen:

Bestätigen einer ersten vertrauenswürdigen Ausführungsumgebung in der ersten Vorrichtung (110) als vertrauenswürdig;

Aufbauen eines ersten sicheren Kommunikationskanals zwischen der dritten Vorrichtung (130) und der ersten vertrauenswürdigen Ausführungsumgebung; und

Übertragen des zweiten Geheimnisunterschlüssels via den ersten sicheren Kommunikationskanal zur ersten vertrauenswürdigen Ausführungsumgebung der ersten Vorrichtung (110).

11. Dritte Vorrichtung (130) nach Anspruch 9, wobei die dritte Vorrichtung (130) ferner Folgendes umfasst:

Mittel zum Übertragen eines dritten Geheimnisschlüssels zu mindestens einer vierten Vorrichtung (440) zum Verschlüsseln von standortbezogenen Informationen, die mit der dritten Vorrichtung (130) verknüpft sind, wobei die verschlüsselten standortbezogenen Informationen der dritten Vorrichtung (130) zum Bestimmen der Standortinformationen der dritten Vorrichtung (130) zur ersten Vorrichtung (110) zu übertragen sind; und

Mittel zum Übertragen des dritten Geheimnisschlüssels und des ersten Geheimnisschlüssels zur ersten Vorrichtung (110).

12. Dritte Vorrichtung (130) nach Anspruch 9, wobei die dritte Vorrichtung (130) ferner Folgendes umfasst:

Mittel zum Übertragen von Verschleierungsinformationen zu der mindestens einen vierten Vorrichtung (440), um die standortbezogenen Informationen zu verschleiern;

Mittel zum Empfangen von verschleierten Standortinformationen der dritten Vorrichtung (130) von der ersten Vorrichtung (110); und

Mittel zum Wiederherstellen der Standortinformationen der dritten Vorrichtung (130) auf Basis der Verschleierungsinformationen aus den verschleierten Standortinformationen.

13. Verfahren, das Folgendes umfasst:

Empfangen (710) einer Anforderung zum Bereitstellen von Daten eines standortbasierten Dienstes an einer ersten Vorrichtung (110) und von einer zweiten Vorrichtung (120) für eine dritte Vorrichtung (130) von der zweiten Vorrichtung (120), wobei die Anforderung einen ersten Geheimnisunterschlüssel umfasst, der mit der dritten Vorrichtung (130) verknüpft ist;

Erzeugen (720) eines ersten Geheimnisschlüssels für die dritte Vorrichtung auf Basis des ersten Geheimnisunterschlüssels und eines zweiten Geheimnisunterschlüssels, die mit der dritten Vorrichtung (130) verknüpft sind;

Entschlüsseln (730) von verschlüsselten Standortinformationen der dritten Vorrichtung (130) unter Verwendung des ersten sicheren Schlüssels;

Zugreifen (740) auf die Daten des standortbasierten Dienstes von der zweiten Vorrichtung (120) auf Basis der entschlüsselten Standortinformationen der dritten Vorrichtung (130); und

Bereitstellen (750) der Daten des standortbasierten Dienstes für die dritte Vorrichtung (130).

14. Verfahren, das Folgendes umfasst:

Erzeugen (910) von mindestens einem ersten Geheimnisunterschlüssel und einem zweiten Geheimnisunterschlüssel an einer dritten Vorrichtung (130), wobei ein erster Geheimnisschlüssel auf dem zweiten Geheimnisunterschlüssel und einem des mindestens einen ersten Geheimnisunterschlüssels basiert, und von Standortinformationen der dritten Vorrichtung (130), die unter Verwendung des ersten Geheimnisschlüssels zu verschlüsseln sind;

Übertragen (920) des zweiten Geheimnisunterschlüssels zu einer ersten Vorrichtung (110);

Übertragen (930) des mindestens einen ersten Geheimnisunterschlüssels jeweils zu mindestens einer zweiten Vorrichtung (120), wobei die dritte Vorrichtung (130) mindestens einen standortbasierten Dienst jeweils von der mindestens einen zweiten Vorrichtung (120) abonniert; und

Erhalten (940) von Daten eines standortbasierten Dienstes, die von einer zweiten Vorrichtung (120) der mindestens einen zweiten Vorrichtung (120) bereitgestellt werden, von der ersten Vorrichtung (110), wobei die Daten des standortbasierten Dienstes auf den Standortinformationen der dritten Vorrichtung (130) basieren.

15. Computerprogramm (1030), das Anweisungen zum Veranlassen einer Einrichtung, mindestens das Verfahren nach einem der Ansprüche 13 und 14 durchzuführen, umfasst.

## Revendications

1. Premier dispositif (110) comprenant :

des moyens pour recevoir (710) d'un deuxième dispositif (120) une demande de fourniture de données d'un service basé sur l'emplacement, du deuxième dispositif (120) à un troisième dispositif (130), la demande comprenant une première sous-clé secrète associée au troisième dispositif (130) ;

des moyens pour générer (720) une première clé secrète pour le troisième dispositif (130) sur la base de la première sous-clé secrète et d'une deuxième sous-clé secrète associée au troisième dispositif (130) ;

des moyens pour déchiffrer (730) des informations d'emplacement chiffrées du troisième dispositif (130) en utilisant la première clé secrète ;

des moyens pour accéder (740) aux données du service basé sur l'emplacement à partir du deuxième dispositif (120) sur la base des informations d'emplacement déchiffrées du troisième dispositif (130) ; et

des moyens pour fournir (750) les données du service basé sur l'emplacement au troisième dispositif (130).

2. Premier dispositif (110) selon la revendication 1, dans lequel des moyens pour accéder (740) aux données du service basé sur l'emplacement comprennent :

des moyens pour recevoir une deuxième clé secrète du deuxième dispositif (120), les données du service basé sur l'emplacement étant chiffrées en utilisant la deuxième clé secrète ; et

des moyens pour accéder aux données du service basé sur l'emplacement sur la base de la deuxième clé secrète.

**3.** Premier dispositif (110) selon la revendication 1, comprenant en outre :

des moyens pour amener le troisième dispositif (130) à attester qu'un premier environnement d'exécution de confiance dans le premier dispositif (110) est de confiance ;
des moyens pour établir un premier canal de communication sécurisé entre le premier environnement d'exécution de confiance et le troisième dispositif (130) ; et
recevoir la deuxième sous-clé secrète du troisième dispositif (130) via le premier canal de communication sécurisé.

**4.** Premier dispositif (110) selon la revendication 3, dans lequel la génération (720) de la première clé secrète, le déchiffrement (730) des informations d'emplacement chiffrées et l'accès (740) aux données du service basé sur l'emplacement sont effectués dans le premier environnement d'exécution de confiance.

**5.** Premier dispositif (110) selon la revendication 3, dans lequel les moyens pour fournir (750) les données du service basé sur l'emplacement comprennent :
des moyens pour transmettre les données du service basé sur l'emplacement au troisième dispositif (130) via le premier canal de communication sécurisé.

**6.** Premier dispositif (110) selon la revendication 1, dans lequel le premier dispositif (110) comprend en outre :
des moyens pour rejeter la première clé secrète après que les informations d'emplacement chiffrées ont été déchiffrées.

**7.** Premier dispositif (110) selon la revendication 1, dans lequel le premier dispositif (110) comprend en outre :

des moyens pour recevoir une troisième clé secrète du troisième dispositif (130) ;
des moyens pour recevoir d'un ou plusieurs quatrièmes dispositifs (440) des informations relatives à l'emplacement chiffrées associées au troisième dispositif (130) ;
des moyens pour déchiffrer les informations relatives à l'emplacement chiffrées associées au troisième dispositif (130) en utilisant la troisième clé secrète ; et
des moyens pour déterminer les informations d'emplacement du troisième dispositif (130) sur la base des informations relatives à l'emplacement déchiffrées.

**8.** Premier dispositif (110) selon la revendication 7, dans lequel le premier dispositif (110) comprend en outre :

des moyens pour amener le troisième dispositif (130) à attester qu'un deuxième environnement d'exécution de confiance dans le premier dispositif (110) est de confiance ;
des moyens pour établir un deuxième canal de communication sécurisé entre le deuxième environnement d'exécution de confiance et le troisième dispositif (130) ;
des moyens pour recevoir la première clé secrète du troisième dispositif (130) via le deuxième canal de communication sécurisé ; et
des moyens pour chiffrer, dans le deuxième environnement d'exécution de confiance, les informations d'emplacement déterminées du troisième dispositif (130) en utilisant la première clé secrète.

**9.** Troisième dispositif (130), comprenant :

des moyens pour générer (910) une ou plusieurs premières sous-clés secrètes et une deuxième sous-clé secrète, une première clé secrète étant basée sur la deuxième sous-clé secrète et sur l'une des une ou plusieurs premières sous-clés secrètes, et des informations d'emplacement du troisième dispositif (130) à chiffrer en utilisant la première clé secrète ;
des moyens pour transmettre (920) la deuxième sous-clé secrète à un premier dispositif (110) ;
des moyens pour transmettre (930) respectivement les une ou plusieurs premières sous-clés secrètes à un ou plusieurs deuxièmes dispositifs (120), le troisième dispositif (130) souscrivant un ou plusieurs services basés sur l'emplacement à partir des un ou plusieurs deuxièmes dispositifs (120), respectivement ; et
des moyens pour obtenir (940) du premier dispositif (110) des données d'un service basé sur l'emplacement fourni par un deuxième dispositif (120) des un ou plusieurs deuxièmes dispositifs (120), les données du service basé sur l'emplacement étant basées sur les informations d'emplacement du troisième dispositif (130).

**10.** Troisième dispositif (130) selon la revendication 9, dans lequel les moyens pour transmettre (920) la deuxième sous-clé secrète comprennent :

l'attestation d'un premier environnement d'exécution de confiance dans le premier dispositif (110) comme étant de confiance ;

l'établissement d'un premier canal de communication sécurisé entre troisième dispositif (130) et le premier environnement d'exécution de confiance ; et

la transmission de la deuxième sous-clé secrète au premier environnement d'exécution de confiance du premier dispositif (110) via le premier canal de communication sécurisé.

**11.** Troisième dispositif (130) selon la revendication 9, dans lequel le troisième dispositif (130) comprend en outre :

des moyens pour transmettre une troisième clé secrète à un ou plusieurs quatrièmes dispositifs (440) pour chiffrer des informations relatives à l'emplacement associées au troisième dispositif (130), les informations relatives à l'emplacement chiffrées du troisième dispositif (130) devant être transmises au premier dispositif (110) pour déterminer les informations d'emplacement du troisième dispositif (130) ; et

des moyens pour transmettre la troisième clé secrète et la première clé secrète au premier dispositif (110).

**12.** Troisième dispositif (130) selon la revendication 9, dans lequel le troisième dispositif (130) comprend en outre :

des moyens pour transmettre des informations d'obscurcissement aux un ou plusieurs quatrièmes dispositifs (440) pour obscurcir les informations relatives à l'emplacement ;

des moyens pour recevoir des informations d'emplacement obscurcies du troisième dispositif (130) du premier dispositif (110) ; et

des moyens pour récupérer les informations d'emplacement du troisième dispositif (130) à partir des informations d'emplacement obscurcies sur la base des informations d'obscurcissement.

**13.** Procédé comprenant les étapes suivantes :

au niveau d'un premier dispositif (110) et d'un deuxième dispositif (120), recevoir (710) une demande de fourniture de données d'un service basé sur l'emplacement, du deuxième dispositif (120) à un troisième dispositif (130), la demande comprenant une première sous-clé secrète associée au troisième dispositif (130) ;

générer (720) une première clé secrète pour le troisième dispositif sur la base de la première sous-clé secrète et d'une deuxième sous-clé secrète associée au troisième dispositif (130) ;

déchiffrer (730) des informations d'emplacement chiffrées du troisième dispositif (130) en utilisant la première clé secrète ;

accéder (740) aux données du service basé sur l'emplacement à partir du deuxième dispositif (120) sur la base des informations d'emplacement déchiffrées du troisième dispositif (130) ; et

fournir (750) les données du service basé sur l'emplacement au troisième dispositif (130).

**14.** Procédé comprenant les étapes suivantes :

au niveau d'un troisième dispositif (130), générer (910) une ou plusieurs premières sous-clés secrètes et une deuxième sous-clé secrète, une première clé secrète étant basée sur la deuxième sous-clé secrète et sur l'une des une ou plusieurs premières sous-clés secrètes, et des informations d'emplacement du troisième dispositif (130) à chiffrer en utilisant la première clé secrète ;

transmettre (920) la deuxième sous-clé secrète à un premier dispositif (110) ;

transmettre (930) respectivement les une ou plusieurs premières sous-clés secrètes à un ou plusieurs deuxièmes dispositifs (120), le troisième dispositif (130) souscrivant un ou plusieurs services basés sur l'emplacement à partir des un ou plusieurs deuxièmes dispositifs (120), respectivement ; et

obtenir (940) du premier dispositif (110) des données d'un service basé sur l'emplacement fourni par un deuxième dispositif (120) des un ou plusieurs deuxièmes dispositifs (120), les données du service basé sur l'emplacement étant basées sur les informations d'emplacement du troisième dispositif (130).

**15.** Programme informatique (1030) comprenant des instructions pour amener un appareil à exécuter au moins le procédé de l'une des revendications 13 et 14.

**Fig. 1**

**Fig. 2**

300 ⟍

**Fig. 3**

**Fig. 4**

500

| 130 | 440 | 110 |
|---|---|---|
| THIRD DEVICE | FOURTHDEVICE(S) . . . | FIRST DEVICE |

THIRD SECRET KEY, $sk'$

502 ———————————————→ 504

THIRD SECRET KEY, $sk'$ AND FIRST SECRET KEY, $sk$

506 ———————————————————————————→ 508

ENCRYPTED LOCATION-
RELATED INFORMATION

510 ———————————→ 512

514

516 112

223

LOCATION INFORMATION OF THE THIRD DEVICE

520 ←——————————————————— 518

**Fig. 5**

**Fig. 6**

EP 4 218 264 B1

700

RECEIVE A REQUEST FOR PROVISIONING DATA OF A
LOCATION-BASED SERVICE FROM THE SECOND
DEVICE TO A THIRD DEVICE

710

GENERATE A FIRST SECRET KEY FOR THE THIRD
DEVICE BASED ON THE FIRST SECRET SUB-KEY AND
SECOND SECRET SUB-KEY ASSOCIATED WITH THE
THIRD DEVICE

720

DECRYPT ENCRYPTED LOCATION INFORMATION OF
THE THIRD DEVICE USING THE FIRST SECURE KEY

730

ACCESS THE DATA OF THE LOCATION-BASED SERVICE
FROM THE SECOND DEVICE BASED ON THE
DECRYPTED LOCATION INFORMATION OF THE THIRD
DEVICE

740

PROVIDE THE DATA OF THE LOCATION-BASED
SERVICE FOR THE THIRD DEVICE

750

Fig. 7

800 —

810

RECEIVE, FROM THE THIRD DEVICE, A FIRST SECRET
SUB-KEY ASSOCIATED WITH THE THIRD DEVICE

820

TRANSMIT, TO A FIRST DEVICE, A REQUEST FOR
PROVISIONING DATA OF THE LOCATION-BASED
SERVICE TO THE THIRD DEVICE, THE REQUEST
COMPRISING THE FIRST SECRET SUB-KEY

830

ASSIGN A PERMISSION TO THE FIRST DEVICE TO
ACCESS DATA OF THE LOCATION-BASED SERVICE
FOR THE THIRD DEVICE

**Fig. 8**

900 —

910

GENERATE AT LEAST ONE FIRST SECRET SUB-KEY
AND A SECOND SECRET SUB-KEY

920

TRANSMIT THE SECOND SECRET SUB-KEY TO A FIRST
DEVICE

930

TRANSMIT THE AT LEAST ONE FIRST SECRET SUB-KEY
RESPECTIVELY TO AT LEAST ONE SECOND DEVICE

940

OBTAIN, FROM THE FIRST DEVICE, DATA OF A
LOCATION-BASED SERVICE PROVISIONED BY A
SECOND DEVICE OF THE AT LEAST ONE SECOND
DEVICE

**Fig. 9**

**Fig. 10**

**Fig. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012050033 A1